# EUROPEAN PATENT APPLICATION

(11) **EP 4 011 250 A1**
(43) Date of publication of application: **15.06.2022**
(21) Application number: 21211765.9
(22) Date of filing: 01.12.2021
(51) Int. Cl.: A47J 31/40

(54) **BIFURCATED BEVERAGE PREPARATION SYSTEM**

(30) Priority: 02.12.2020 US 202063120213 P
(71) Applicant: Hamat Sanitary Fittings and Castings Ltd., 7716401 Ashdod (IL)
(72) Inventor: PIRUTIN, Shlomo, 7770033 Ashdod (IL); DANINO, Chaim, 4974447 Petah Tikva (IL); MAHFUDA, David, 4935427 Ariel (IL)
(74) Representative: Schulz Junghans Patentanwälte PartGmbB

(57) **Abstract**

Disclosed herein is a bifurcated beverage preparation system (90) for use with beverage capsules (110) having frustoconical side walls (111), first and second sealed ends (120, 121) for containing a predetermined volume of a flavoring agent, a beverage preparation head (100, 102) including a housing (101) having a liquid inlet (116) and a beverage delivery spout (112), a retractable holder (108) for positioning a beverage capsule (110) along a liquid flow path extending between the liquid inlet (116) and the beverage delivery spout (112), a hydraulically operated plunger (231) for engaging and puncturing the beverage capsule (110) when positioned along the liquid flow path, thereby exposing the flavoring agent contained therein, and a hydraulic operating unit (150) mounted remotely from the housing (101) and the faucet spout (113), operative to supply a liquid at a predetermined temperature and under a predetermined pressure to the liquid, thereby causing a flow of the liquid along the flow path through the beverage capsule (110), thereby delivering an outflow of a flavored beverage.

## Description

### FIELD OF THE INVENTION

The present disclosure is in the field of beverage preparation systems.

### BACKGROUND

An espresso machine brews coffee by forcing pressurized water near boiling point through a condensed pack of ground coffee and a filter in order to produce a thick, concentrated coffee called espresso. A single-serve coffee container, also referred to as a capsule, is a type of coffee container used in coffee brewing for preparing only enough coffee for a single portion.

Use of capsules can both reduce the time needed to brew coffee and simplify the brewing process by eliminating the need to measure out portions, flavorings, and additives from large bulk containers. The capsules can also help keep the unused product fresh by individually packaging portions separately without exposing the entire supply batch to air and light.

Commercially available systems are normally provided in the form of a counter top device, such as may be used in private homes and small offices, and somewhat larger systems, such as the Nespresso^{®} machines seen at https://www.nespresso.com/pro/nl/en/professionele-koffiemachine.

### SUMMARY

The present invention is a bifurcated beverage preparation system for installation in conjunction with a faucet of the type found typically in kitchens and similar food preparation facilities.

There is therefore provided, in accordance with one embodiment, a beverage preparation head which has a housing with a liquid inlet and a beverage delivery spout, a retractable beverage capsule holder, a hydraulically operated plunger for engaging and puncturing a first and second sealed ends of a beverage capsule when positioned along a liquid flow path extending between a liquid inlet and a beverage delivery spout, a mounting element and a hydraulic operating unit. The hydraulic operating unit is mounted remotely from the housing and the faucet, operative to supply a liquid at a predetermined temperature and under a predetermined pressure to the liquid inlet of said housing, thereby to cause a flow of the liquid along a flow path and through said beverage capsule, thereby to deliver an outflow of a flavored beverage via a beverage delivery spout.

Additionally in accordance with an embodiment, the beverage preparation head also includes a capsule compartment in which the retractable holder containing the beverage capsule is positioned during beverage preparation, wherein the hydraulic operated plunger is operative to cooperate with the capsule compartment and encloses around the capsule so as to form together a beverage preparation chamber.

Further in accordance with an embodiment, the hydraulic operating unit includes a liquid temperature controller for adjusting the temperature of the liquid to be used for the beverage.

Additionally in accordance with an embodiment, the hydraulic operating unit includes a pump for pumping liquid from a liquid source to a hydraulic sealing element so as to actuate the hydraulic sealing element to seal the capsule compartment during beverage preparation, and for pumping a temperature adjusted liquid from a liquid source to the liquid inlet of the beverage preparation unit, to allow the liquid to flow through the beverage capsule and deliver the flavored beverage through the beverage delivery spout.

Further in accordance with an embodiment, the hydraulic operating unit also includes a hydraulic solenoid valve configured to facilitate drainage of a liquid used to actuate the hydraulic operated plunger, upon completion of the beverage preparation.

Additionally in accordance with an embodiment, the first sealed end of a capsule is sealed by a frangible film, and the second sealed end is formed of a rigid material. The capsule compartment includes an upward facing jagged surface, and the hydraulic operated plunger includes one or more downward facing puncturing element for puncturing the second sealed end, hydraulically movable towards the upward facing jagged surface, thereby puncturing the second sealed end and rupturing of the first sealed end. The retractable holder is configured, in its retracted position, to position the beverage capsule such that its first sealed end faces downwards towards the upward facing jagged surface, and its second sealed end faces upwards towards the downward facing puncturing element. The actuation of the pump is further operative to move the one or more downward facing puncturing element towards the upward facing jagged bottom surface, thereby to cause puncturing of the second sealed end and rupture of the first sealed end, whereupon liquid pumped by the pump to the liquid inlet is forced through the openings formed in both ends of the capsule so as to mix the flavoring agent with the liquid to form a beverage, and then flowing out of the beverage preparation unit via the delivery spout.

Further in accordance with an embodiment, including a beverage solenoid valve operative to facilitate drainage of residue liquid and materials from within the capsule compartment.

Additionally in accordance with an embodiment, the system is adapted to receive water from an external source, and includes a pressure valve for reducing the pressure of the water received from the external source.

Further in accordance with an embodiment, the mounting element includes a mounting housing including a bottom portion configured to connect to a base of the faucet, a top portion configured to connect to the faucet spout, a first side opening directing of the one or more water supply line and the hydraulic hose from the pump to the housing, a partition to separate the faucet conduit and one or more water supply line and the hydraulic hose.

Additionally in accordance with an embodiment, the mounting element includes a first clamping element connected to the housing, a second clamping element, one or more screws connecting the first and second clamping elements thereby clamping the first and second clamping elements onto a faucet spout.

Further in accordance with an embodiment, the hydraulic operating unit includes a controller, including an activation button configured to activate the controller.

### BRIEF DESCRIPTION OF THE DRAWINGS

Some non-limiting exemplary embodiments or features of the disclosed subject matter are illustrated in the following drawings.
Fig. 1A is a block diagram representation of a bifurcated beverage preparation system in accordance with an embodiment of the present invention;
Fig. 1B is a pictorial representation of the system of Fig. 1A as installed, according to certain exemplary embodiments;
Fig. 2 schematically illustrates the system, according to certain exemplary embodiments;
Fig. 3 shows a method of operation of the system, according to certain embodiments;
Fig. 4 illustrates a mounting element for mounting the beverage preparation head of the system onto a faucet, according to certain exemplary embodiments;
Figs. 5A-5D schematically illustrate insertion and removal of a beverage capsule into the beverage preparation head of the system, according to certain exemplary embodiments;
Fig. 6 schematically illustrates a side cutaway view of the beverage preparation head of the system, according to certain exemplary embodiments;
Fig. 7 schematically illustrates a side cutaway view of the beverage preparation head of the system showing movement of a hydraulic sealing element therein, according to certain exemplary embodiments;
Figs. 8A-8D schematically illustrate another mounting element for mounting the beverage preparation head of the system onto a faucet, according to certain exemplary embodiments; and,
Fig. 9 schematically illustrates an exploded view of the beverage preparation head, according to certain exemplary embodiments.

Identical, duplicate, equivalent or similar structures, elements or parts that appear in one or more drawings are generally labeled with the same reference numeral, optionally with an additional letter or letters to distinguish between similar entities or variants of entities, and may not be otherwise repeatedly labeled and/or described. References to previously presented elements are implied without necessarily further citing the drawing or description in which they appear.

Dimensions of components and features shown in the figures are chosen for convenience or clarity of presentation and are not necessarily shown to scale or true perspective. For convenience or clarity, some elements or structures are not shown or shown only partially and/or with different perspective or from different point of viewpoints.

### DETAILED DESCRIPTION

Disclosed herein is a bifurcated beverage preparation system, denoted in the drawings by reference numeral 90, according to certain exemplary embodiments. The aspect in which the system is bifurcated, is the separation of the beverage preparation and dispensing components, on the one hand, embodied herein and shown in the drawings as beverage preparation head 100, mounted on a faucet 105 by a mounting element 104; and the liquid supply and system operation components, on the other hand, embodied herein and shown in the drawings as hydraulic operating unit 150. This separation facilitates the integration of the system with a conventional counter-top type faucet, taking up minimal "above counter" space in the vicinity of the faucet, while the system operation components are stored beneath the counter.

Definition: The terms "liquid" and "water" are used in the present specification. In a sense, they are used interchangeably, as the system is intended to use any liquid of choice, this being the case whether such liquid forms part of a beverage or part of the hydraulic components of the system. In the examples detailed below, however, the liquid of choice is water although, as mentioned above, this is not intended to exclude use of the present system with other liquids.

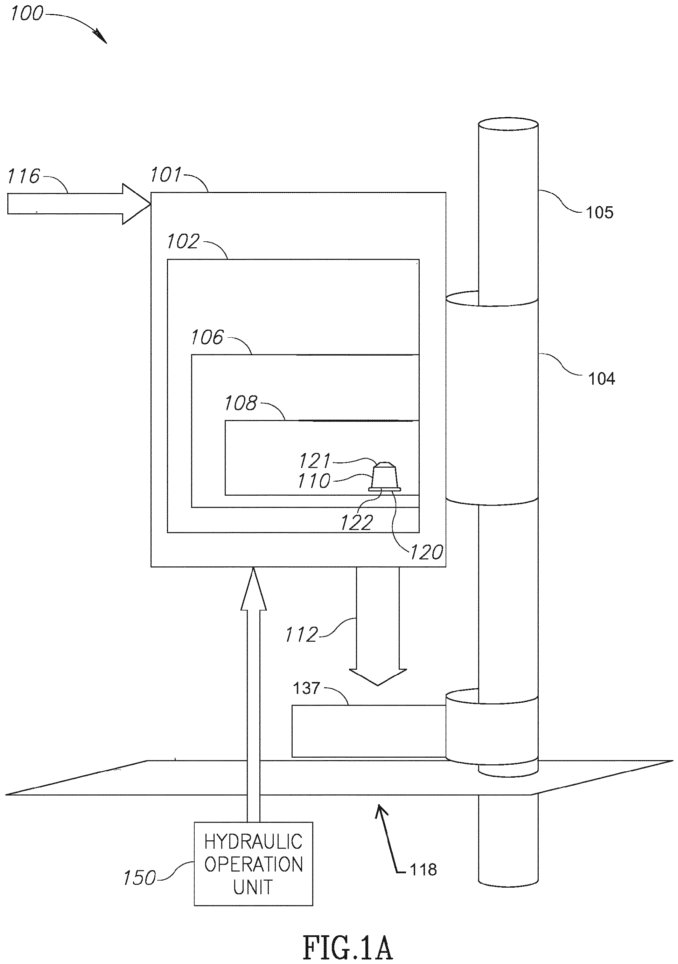

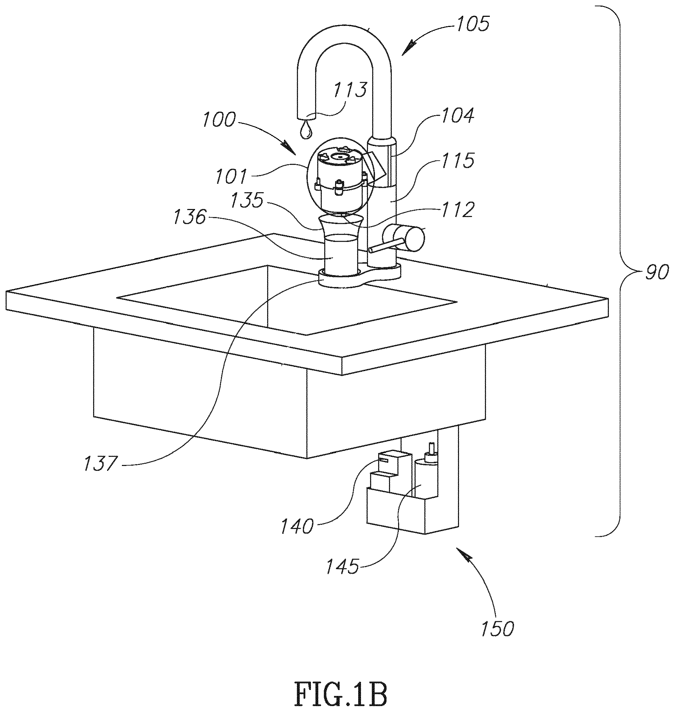

As will be seen with reference to Figs. 1A and 1B, and as mentioned above, bifurcated beverage preparation system 90, is composed of beverage preparation head 100, having a housing 101 mounted as by schematically illustrated mounting element 104 onto faucet 105; and a hydraulic operating unit, referenced generally 150, mounted typically under-counter, referenced generally 118, remotely from housing 101 and faucet 105.

Housing 101 includes a liquid inlet 116 and a delivery spout 112 to facilitate outflow of a prepared beverage. Housing 101 includes therein a beverage preparation head 102 having a capsule compartment 106 configured to hold a beverage capsule 110 during preparation of a beverage. It is appreciated that beverage capsule and capsule are used interchangeably herein to refer beverage capsule 110.

Beverage capsule 110 can generally have a frustoconical side wall 111 formed of a rigid material, such as plastic, aluminum and/or the like, which terminates in a second sealed end 121 so as to form a volume for containing a predetermined volume of a flavoring agent, and a first sealed end 120 sealed by a frangible film 122. Beverage preparation head 102 includes a retractable holder 108 for positioning beverage capsule 110 along a liquid flow path (not shown) extending between liquid inlet 116 and delivery spout 112, such that opening of capsule 110 at both ends 121 and 120, as described hereinbelow in detail, and then streaming liquid therethough so to cause flavor to be imparted to the through flowing liquid, produces the beverage. In certain exemplary embodiments, a plurality of retractable holders 108 can be inserted into beverage preparation head 102 thereby facilitating the use of a plurality of differently sized and shaped beverage capsule with beverage preparation system 90.

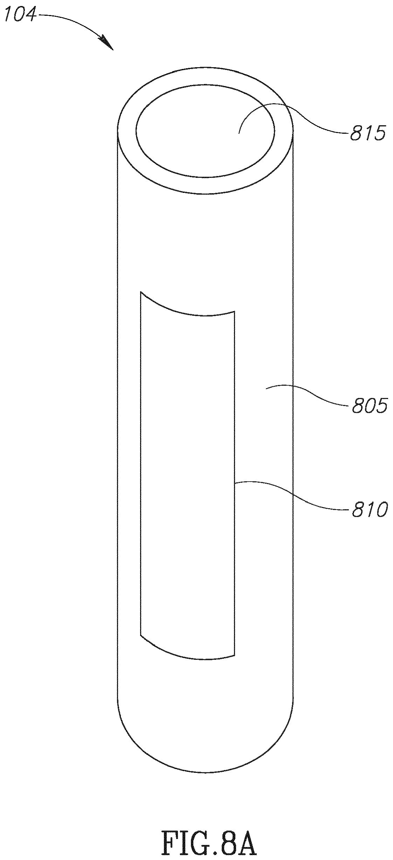

As seen in Fig. 1B, and as described in more detail below in conjunction with Figs. 8A-8D, mounting element 104 is configured to mount housing 101 of beverage preparation head 100 onto faucet 105 between a faucet base 115 and a faucet spout 113. Receptacle 135 is positioned on a beverage receptacle tray 137 in alignment with delivery spout 112 to receive an outflow of the beverage 136 from delivery spout 112.

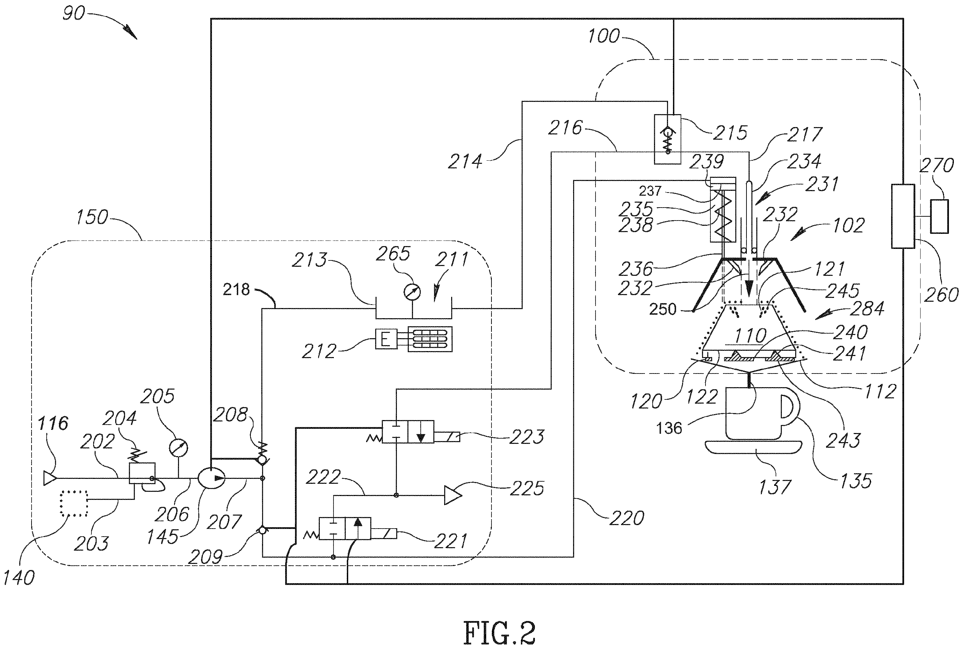

Referring now to Fig. 2, there is provided a hydraulically operated plunger 231 which, in cooperation with a stationary bottom surface 243 of capsule compartment 106, forms a pressurized beverage preparation chamber, in which the contents of a capsule positioned therein is exposed.

As seen clearly in the drawing, hydraulically operated plunger 231 has several downward facing puncturing elements 232 which extend in a downward direction. As hydraulically operated plunger 231 is moved downward so as to enclose capsule 110, the tips of downward facing puncturing elements 232 engage and pierce second sealed end 121. In the illustrated embodiment, downward facing puncturing elements 232 are seen to be angled inwardly towards an axis of motion 250 of hydraulically operated plunger 231. Accordingly, as they continue moving downwardly so as to enter the interior of capsule 110, they tear longitudinal openings 245 in the second sealed end 121 thereof. At this time, as hydraulically operated plunger 231 descends further, such that frangible film 122 engages with bottom surface 243 so as to completely seal capsule compartment 106, the first sealed end 120 of capsule 110 is pushed against jagged surface 240, such that its protrusions 241 perforate frangible film 122.

In certain embodiments, hydraulic piston 235 positions capsule 110 on top of bottom surface 243without perforating frangible film 122. As hot liquid is directed into capsule 110, pressure within capsule 110 increases thereby pushing frangible film 122 against jagged surface 240, such that its protrusions 241 perforate frangible film 122.

Pressurized liquid is then introduced into capsule compartment 106 via a plunger conduit 234 formed in hydraulically operated plunger 231. The liquid enters into the interior of capsule 110 via the openings formed in second sealed end 121 of capsule 110, through the capsule and the flavoring agent contained therein, subsequently exiting through the perforated frangible film 122 at first sealed end of the capsule 110.

Referring to hydraulic operating unit 150 that is in liquid communication with a liquid inlet 116 via source conduit 202. Source conduit 202 directs liquid from liquid inlet 116 to a pressure regulator 204, which maintains the liquid pressure of the liquid directed to a pump 145 via pump hose 206. A pressure regulator monitor 205 can be in liquid communication with pump hose 206 to facilitate monitoring of the liquid pressure. In certain optional exemplary embodiments, hydraulic operating unit 150 can include a liquid tank 140 for storing liquid that can be used for beverage preparation when no liquid is provided by liquid inlet 116, for example, when beverage preparation system 90 is disconnected from liquid inlet 116. In some embodiments, liquid tank 140 is in fluid communication with pressure regulator 204 and source conduit 202 through tank conduit 203.

Pump 145, which, for example, may be a vibratory pump, for pumping water to hydraulically operated plunger 231 thereby actuating hydraulically operated plunger 231. Pump 145 pumps the liquid through a split line 207, a hydraulic valve 209 and a hydraulic hose 220 to hydraulically operated plunger 231 as described in conjunction with Fig. 2. Hydraulically operated plunger 231 includes a hydraulic piston 235 having a piston 236, one or more hydraulic springs 238 and a liquid chamber 237. Liquid chamber 237 is filled with the pumped liquid such that as it is filled, pressure builds in liquid chamber 237 thereby actuating a bottom panel 239 downwards onto a top end of piston 236. As bottom panel 239 applies force onto piston 236, piston is actuated to apply a relatively same force onto hydraulically operated plunger 231 resulting in its downward movement.

Pumping of water thereby actuating hydraulic piston 235 is operative to move downward facing puncturing element 232 towards an bottom surface 243, thereby to cause puncturing of second sealed end 121 and rupture of first sealed end 120, whereupon liquid pumped by pump 145 to liquid inlet is forced through longitudinal openings 245 formed in both ends of capsule 110 so as to mix with the flavoring agent therein so as to form beverage 136, thereafter flowing out of beverage preparation head 102 via delivery spout 112. In certain embodiments, bottom surface 243 prevents the passage of grains from capsule 110 into delivery spout 112. Hydraulic operating unit 150 includes a hydraulic solenoid valve 221 configured to facilitate drainage of the liquid used to actuate said hydraulically operated plunger 231, upon completion of the beverage preparation. The liquid is drained from liquid chamber 237 and directed to a disposal outlet 225 via hydraulic hose 220 and a dispensing conduit 222. As the liquid is drained from liquid chamber 237, hydraulic spring 238 pushes bottom panel 239 upwards into liquid chamber 237 thereby pulling hydraulic piston 235 and hydraulically operated plunger 231 upwards away from capsule compartment 106.

Pump 145 is further operative to pump liquid through split line 207 to a first beverage valve 208 and a temperature pipe 218 to a liquid temperature controller 211. Liquid temperature controller 211 changes the temperature of the liquid to a predetermined temperature desired for beverage preparation. In one optional exemplary embodiment, liquid temperature controller 211 can include a heater 212 and a heating tank 213 for heating the water to a predetermined temperature. Liquid temperature controller 211 can include a temperature sensor 265 to facilitate regulating the predetermined temperature. From liquid temperature controller 211 the liquid is directed through a first beverage pipe 214, a second beverage valve 215, a second beverage pipe 217 and a sealing plunger conduit 234 to capsule compartment 106. At capsule compartment 106, the liquid is supplied at the predetermined temperature and the predetermined pressure through beverage capsule 110 thereby delivering an outflow of a flavored beverage via beverage delivery spout 112, substantially as described above.

Hydraulic operating unit 150 includes a beverage solenoid valve 223 operative to facilitate drainage of residue liquid and materials from within capsule compartment 106 to disposal outlet 225. The residue liquid is drained through second beverage pipe 217, dispersal conduit 216 and dispensing conduit 222 as described in conjunction with Fig. 2.

Beverage system 90 includes an activation button 270, connected to a controller 260, and operative to activate controller 260, which is configured to automatically operate pump 145, first beverage valve 208, second beverage valve 215, beverage solenoid valve 223, hydraulic valve 209 and hydraulic solenoid valve 221 to prepare beverage 136 as described in conjunction with Fig. 2.

In certain exemplary embodiments, first beverage valve 208, second beverage valve 215 and hydraulic valve 209 are one-way valves that are not operated by controller 260. First beverage valve 208, second beverage valve 215 and hydraulic valve 209 each have a spring that is calibrated to allow liquid flow through each valve when a predetermined liquid pressure is applied to each valve, thereby controlling the flow of liquid through beverage preparation system 90.

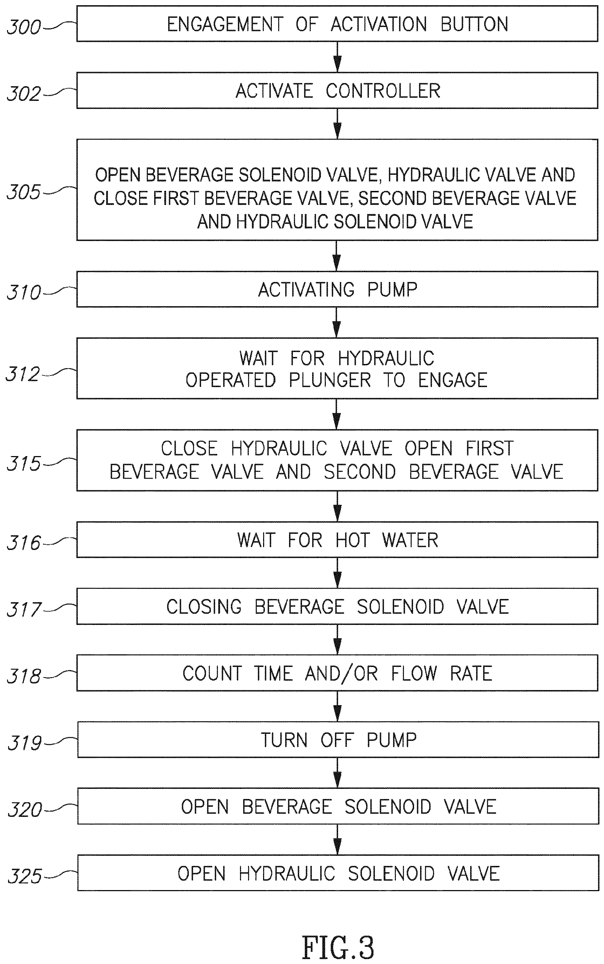

Referring to Fig. 3, showing a method of operation of bifurcated beverage preparation system 90 (Fig. 2), according to certain embodiments. Step 300 discloses engagement of activation button 270 (Fig. 2). Activation button 270 can be a mechanical button, electric button, electromechanical button and/or the like that initiates beverage system 90 to prepare beverage 136 (Fig. 2).

Step 302 discloses activation of controller 260 (Fig. 2). Controller 260 is activated by engagement of activation button 270.

Step 305 discloses closing second beverage valve 215 (Fig. 2), hydraulic solenoid valve 221 (Fig. 2) and first beverage valve 208 (Fig. 2), and opening hydraulic valve 209 (Fig. 2) and beverage solenoid valve 223 (Fig. 2), thereby facilitating residue fluids and materials to flow to disposal outlet 225 (Fig. 2) from second beverage pipe 217 (Fig. 2), dispersal conduit 216 (Fig. 2) and residue dispensing conduit 222 (Fig. 2). Maintaining beverage solenoid valve 223 open prevents the cold water in first beverage pipe 214 and second beverage pipe 217 from reaching capsule 110, by directing all cold water to disposal outlet 225. In certain embodiments, first beverage valve 208 (Fig. 2) and second beverage valve 215 (Fig. 2) prevent water from flowing according to the tension calibration of the spring in the valve, to ensure the proper pressure buildup of the liquid. In certain embodiments, controller 260 can actuate first beverage valve 208 (Fig. 2) and second beverage valve 215 (Fig. 2) into a closed state to prevent water from initially flowing to capsule compartment 106 (Fig. 2).

Step 310 discloses activating pump 145. Controller 260 actuates pump 145 to pump water through hydraulic operating unit 150, which in its present configuration results in liquid being pumped to hydraulically operated plunger 231 to seal capsule compartment 106 and puncture beverage capsule 110 as described above in conjunction with Fig. 2. As water is pumped to hydraulically operated plunger 231, water pressure builds in split line 207, until the water pressure is sufficient to open first beverage valve 208 thereby allowing the water to pass through into first beverage pipe 214.

Step 312 discloses waiting for hydraulic operated plunger 231 to engage. Controller 260 is configured to count a predetermined time during which hydraulic operated plunger to reach capsule 110.

In some embodiments, where controller 260 operates first beverage valve 208 and hydraulic valve 209, optional step 315 discloses opening first beverage valve 208 and second beverage valve 215, and closing hydraulic valve 209.

Step 316 discloses waiting for hot water to run through disposal outlet, thereby removing all cold water from first beverage pipe 214 (Fig. 2) and a second beverage pipe 217 (Fig. 2).

Step 317 discloses closing beverage solenoid valve 223. Beverage solenoid valve 223 is closed after a predetermined time after opening of second beverage valve 215.

Step 318 discloses counting time and/or flow rate. Controller 260 counts a time and/or flow rate to control a volume of fluid provided to capsule 110.

Step 319 discloses turning off pump 145 to stop pumping of water through beverage preparation system 90.

Step 320 discloses opening beverage solenoid valve 223. Beverage solenoid valve 223 is opened to drain residue liquid and materials from within capsule compartment 106.

Step 325 discloses opening hydraulic solenoid valve 221 to facilitate drainage of the liquid used to actuate hydraulically operated plunger 231, upon completion of the beverage preparation.

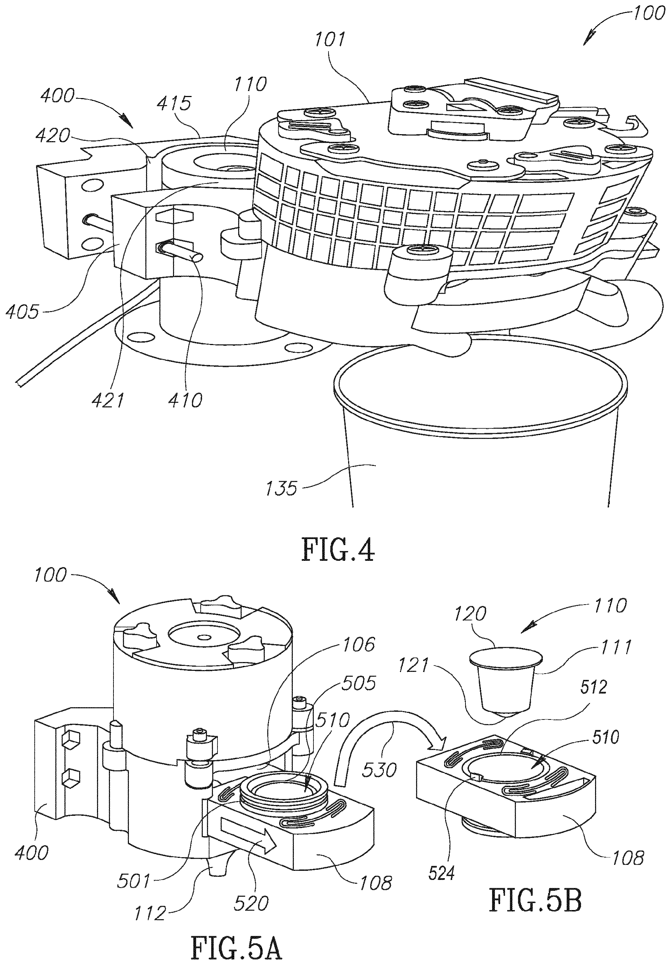

Fig. 4 schematically illustrates beverage preparation head 100 having one exemplary embodiment of a mounting element 400. Mounting element 400 includes a first clamping element 405 and a second clamping element 415 for clamping mounting element 400 onto faucet spout 113 (Fig. 1A). First clamping element 405 and second clamping element 415 include recesses 420, 421 in faucet spout 113 is inserted. One or more bolts 410 can connect first clamping element 405 and second clamping element 415 together and rotation of one or more bolts 410 tightens a grip of mounting element 400 onto faucet spout 113. In certain embodiments, first clamping element 405 and second clamping element 415 are connected by a mortise (not shown) and a tenon joint (not shown). Second clamping element 415 can slide into a groove (not shown) of first clamping element 405 after first clamping element 405 is positioned on faucet spout 113.

Figs. 5A-5D schematically illustrate insertion and removal of a retractable holder 108 from housing 101, according to certain exemplary embodiments. Referring to Fig. 5A, schematically illustrating retractable holder 108 being removed from capsule compartment 106, as indicated by arrow 520. In some exemplary embodiments, retractable holder 108 is a detachable tray. Retractable holder 108 includes a capsule holder 501 having a capsule port 505 into which capsule 110 is inserted.

Referring to Fig. 5B, schematically illustrating retractable holder 108 inverted for insertion of capsule 110, according to certain exemplary embodiments. After retractable holder 108 is removed from housing 101, it is inverted, as represented by arrow 530, to facilitate insertion of capsule 110 into capsule port 505 via insertion opening 510. Opening 510 includes opening border 512 to provide support for capsule 110 when inserted into opening 510.

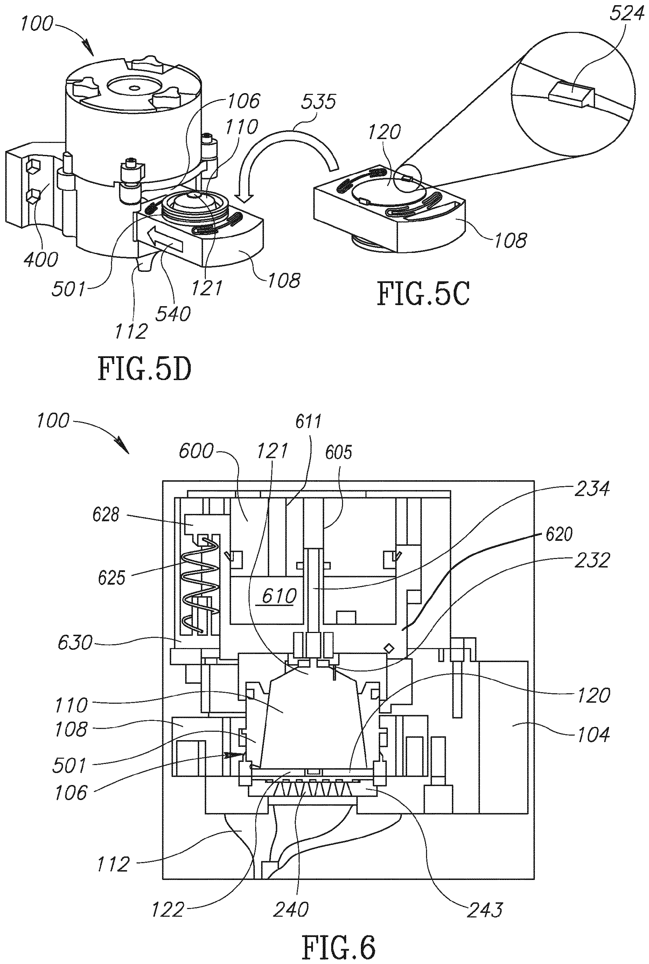

Referring to Fig. 5C, schematically illustrating retractable holder 108 with capsule 110 inserted therein, according to certain exemplary embodiments. Retractable holder 108 includes clips 524 for locking beverage capsule 110 into capsule holder 501 thereby preventing capsule 110 from falling out of capsule holder 501 once retractable holder 108 is flipped back over, as represented by arrow 535.

Referring to Fig. 5D, schematically illustrating insertion of retractable holder 108 into housing 101, according to certain exemplary embodiments. Retractable holder 108 is inserted into housing 101, as indicated by arrow 540, to position first sealed end 120 facing downwards towards bottom surface 243 (Fig. 2), and second sealed end 121 facing upwards towards downward facing puncturing elements 232 (Fig. 2).

Fig. 6 schematically illustrates a side cutaway view of beverage preparation head 100, according to certain embodiments. Retractable holder 108 positions capsule 110 along a liquid flow path (not shown) extending between said liquid inlet 116 and said beverage delivery spout 112. In certain embodiments, beverage preparation head 100 includes a piston 600 arranged above a plunger 620. Fluid chamber 610 is positioned between piston and plunger 620. Piston 600 includes piston conduit 611 for directing water via hydraulic hose 220 (Fig, 2) to fluid chamber 610. As fluid chamber 610 is filled with water, plunger 620 is pushed towards capsule 110 thereby causing downward facing puncturing elements 232 to puncture capsule 110. Each hydraulic spring 625 is connected to plunger 620 at a first end 628 and to beverage preparation head 100 at a second end 630, thereby raising plunger 620 when water is removed from fluid chamber 610.

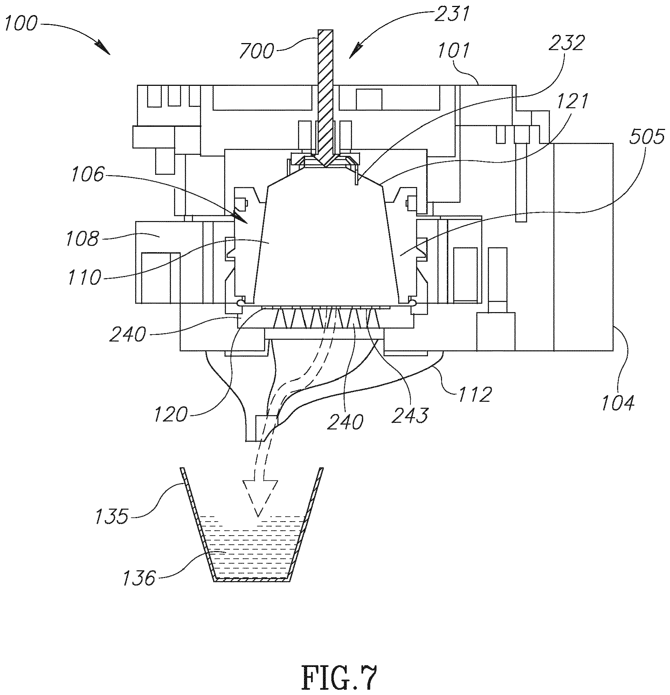

Fig. 7 schematically illustrates a side cutaway view of beverage preparation head 100 showing a direction of movement of hot liquid flow, as represented by arrow 700, according to certain exemplary embodiments.

Figs. 8A-8D illustrate mounting element 104, according to certain embodiments. Fig. 8A illustrates a front view of mounting element 104, according to certain embodiments. Mounting element 104 includes a mounting housing 805 with a first side opening 810 and a top opening 815. Top opening is configured to facilitate mounting housing 805 onto faucet spout 113 (Fig. 1A).

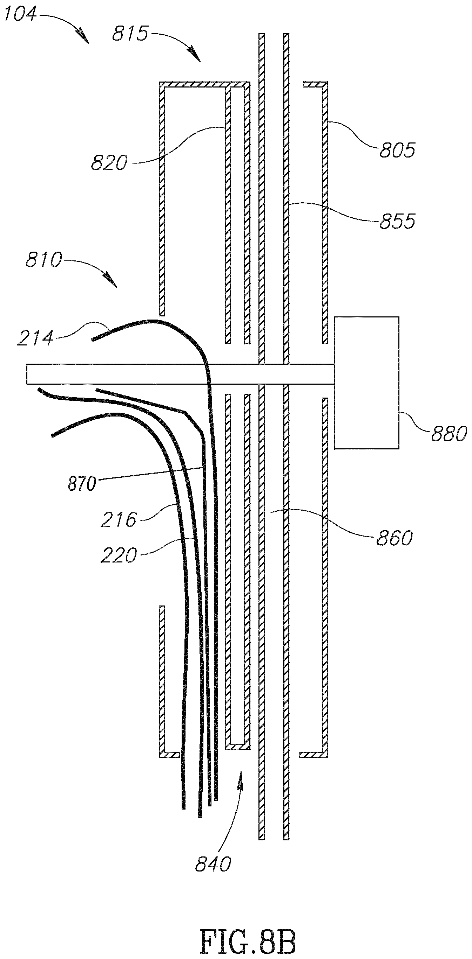

Referring to Fig. 8B, schematically illustrating a cross-section side view of mounting element 104, according to certain exemplary embodiments. First beverage pipe 214, residue dispersal conduit 216 and hydraulic hose 220 are woven through a bottom opening 845 of mounting housing 805 and through first side opening 810 through which first beverage pipe 214, residue dispersal conduit 216 and hydraulic hose 220 are inserted into housing 101 (Fig. 1B). Piping that provides water for faucet spout 113 (Fig. 1A), such as hot water supply line 860 and cold water supply line 855, are passed through mounting housing 805 from bottom 840 to top opening 815. A partition 820 can be arranged within housing 101 to prevent first beverage pipe 214, residue dispersal conduit 216 and hydraulic hose 220 from tangling with hot water supply line 860 and cold water supply line 855. In some embodiments, system 90 (Fig. 1A) includes control cable 870 connecting controller 260 (Fig. 2) positioned in hydraulic operating unit 150 (Fig. 2) and activation button 270 (Fig. 2) positioned on housing 101. In yet other embodiments, control cable connects controller 260 positioned in housing 101 with components of system 90 in hydraulic operating unit 150.

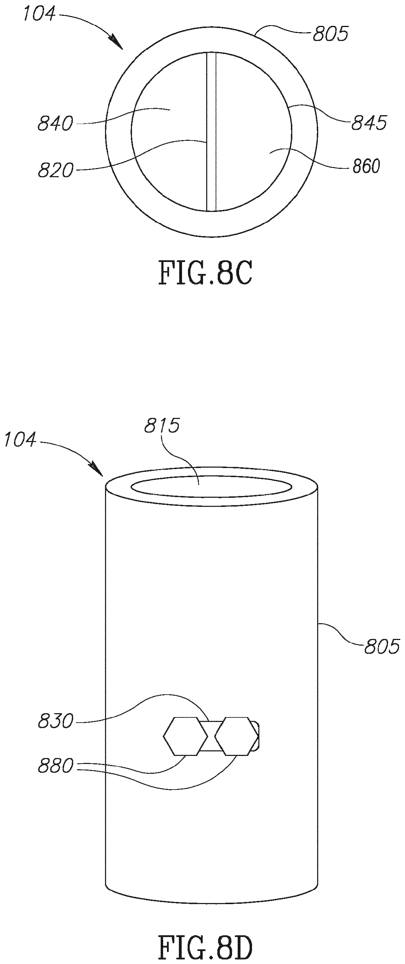

Fig. 8C schematically illustrates a bottom view of mounting element 104, according to certain exemplary embodiments. Bottom 840 of mounting element 104 includes a bottom opening 845 configured to connect mounting element 104 to faucet base 115 (Fig. 1).

Fig. 8D schematically illustrates a rear view of mounting element 104, according to certain exemplary embodiments. Mounting housing 805 include can include a second side opening 830 arranged on an opposite surface to first side opening 810 (Fig. 8B) to facilitate connecting housing 101 to mounting element 104, for example, with one or more bolts 880. In certain embodiments mounting element 104 is part of the molding of housing 101.

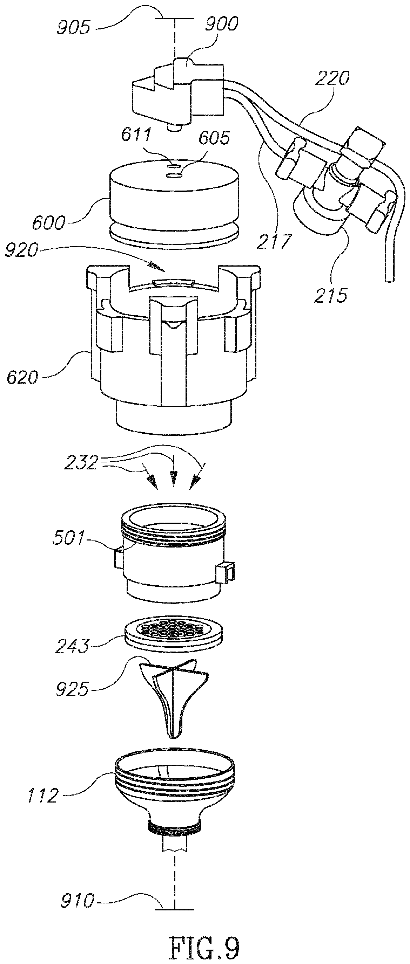

Fig. 9 schematically illustrates an exploded view of the beverage preparation head 102, according to certain exemplary embodiments. A connector 900 directs hydraulic hose 220 and second beverage pipe 217 to piston conduit 611 and to plunger conduit 234 respectively, which go through plunger conduit 605. Piston 600 inserted into plunger 620, represented by arrow 920, downward facing puncturing elements 232, capsule holder 501, bottom surface 243, a flow control element 925 and delivery spout 112 are arranged along a vertical axis, referred generally 915, from top 905 to bottom 910. Flow control element 925 facilitates to create a uniform flow of beverage as it delivery spout 112.

In the context of some embodiments of the present disclosure, by way of example and without limiting, terms such as 'operating' or 'executing' imply also capabilities, such as 'operable' or 'executable', respectively. Conjugated terms such as, by way of example, 'a thing property' implies a property of the thing, unless otherwise clearly evident from the context thereof.

The term 'configuring' and/or 'adapting' for an objective, or a variation thereof, implies using at least a software and/or electronic circuit and/or auxiliary apparatus designed and/or implemented and/or operable or operative to achieve the objective. In case electrical or electronic equipment is disclosed it is assumed that an appropriate power supply is used for the operation thereof.

The corresponding structures, materials, acts, and equivalents of all means or step plus function elements in the claims below are intended to include any structure, material, or act for performing the function in combination with other claimed elements as specifically claimed. As used herein, the singular forms "a", "an" and "the" are intended to include the plural forms as well, unless the context clearly indicates otherwise. It will be further understood that the terms "comprises" and/or "comprising" and/or "having" when used in this specification, specify the presence of stated features, integers, steps, operations, elements, and/or components, but do not preclude the presence or addition of one or more other features, integers, steps, operations, elements, components, and/or groups thereof.

As used herein the term "configuring" and/or 'adapting' for an objective, or a variation thereof, implies using materials and/or components in a manner designed for and/or implemented and/or operable or operative to achieve the objective.

Unless otherwise specified, the terms 'about' and/or 'close' with respect to a magnitude or a numerical value implies within an inclusive range of -10% to +10% of the respective magnitude or value. Unless otherwise specified, the terms 'about' and/or 'close' with respect to a dimension or extent, such as length, implies within an inclusive range of - 10% to +10% of the respective dimension or extent. Unless otherwise specified, the terms 'about' or 'close' imply at or in a region of, or close to a location or a part of an object relative to other parts or regions of the object.

When a range of values is recited, it is merely for convenience or brevity and includes all the possible sub-ranges as well as individual numerical values within and about the boundary of that range. Any numeric value, unless otherwise specified, includes also practical close values enabling an embodiment or a method, and integral values do not exclude fractional values. A sub-range values and practical close values should be considered as specifically disclosed values. As used herein, ellipsis (...) between two entities or values denotes an inclusive range of entities or values, respectively. For example, A... Z implies all the letters from A to Z, inclusively.

The terminology used herein should not be understood as limiting, unless otherwise specified, and is for the purpose of describing particular embodiments only and is not intended to be limiting of the disclosed subject matter. While certain embodiments of the disclosed subject matter have been illustrated and described, it will be clear that the disclosure is not limited to the embodiments described herein. Numerous modifications, changes, variations, substitutions and equivalents are not precluded.

Terms in the claims that follow should be interpreted, without limiting, as characterized or described in the specification.

## Claims

1. A bifurcated beverage preparation system (90) for use with beverage capsules (110) having a generally frustoconical side wall (111) and first and second sealed ends (120, 121) for containing a predetermined volume of a flavoring agent, wherein said system (90) comprises:
a) a beverage preparation head (100, 102) including:
a housing (101) having a liquid inlet (116) and a beverage delivery spout (112);
a selectably retractable holder (108) for positioning a beverage capsule (110) along a liquid flow path extending between said liquid inlet (116) and said beverage delivery spout (112);
a hydraulically operated plunger (231) for engaging and puncturing the first and second sealed ends (120, 121) of a beverage capsule (110) when positioned along said liquid flow path, thereby to expose the flavoring agent contained therein;
b) a mounting element (104) for mounting said head (100, 102) onto a faucet (105); and
c) a hydraulic operating unit (150) mounted remotely from said housing (101) and the faucet spout (113), operative to supply a liquid at a predetermined temperature and under a predetermined pressure to said liquid inlet (116) of said housing (101), thereby to cause a flow of the liquid along said flow path and through said beverage capsule (110), thereby to deliver an outflow of a flavored beverage via said beverage delivery spout (112).

2. A system (90) according to claim 1, wherein said beverage preparation head (100, 102) also includes a capsule compartment (106) in which said selectably retractable holder (108) containing said beverage capsule (110) is positioned during beverage preparation,
wherein said hydraulic operated plunger (231) is operative to cooperate with said capsule compartment (106) and thus enclose around the capsule (110) so as to form together a beverage preparation chamber.

3. A system (90) according to any of the preceding claims, wherein hydraulic operating unit (150) includes a liquid temperature controller (211) for adjusting the temperature of the liquid to be used for the beverage to a predetermined temperature.

4. A system (90) according to any of the preceding claims, wherein hydraulic operating unit (150) includes a pump (145) for pumping liquid from a liquid source to said hydraulically operated plunger (231) so as to actuate said hydraulically operated plunger (231) to seal said capsule compartment (106) during beverage preparation, and for pumping the temperature adjusted liquid from a liquid source to said liquid inlet (116) of said beverage preparation head (100, 102), thereby to cause a flow of the liquid along said flow path and through said beverage capsule (110), thereby to deliver an outflow of a flavored beverage via said beverage delivery spout (112).

5. A system (90) according to claim 2, wherein said hydraulic operating unit (150) also includes a hydraulic solenoid valve (221) configured to facilitate drainage of the liquid used to actuate said hydraulic operated plunger (231), upon completion of the beverage preparation.

6. A system (90) according to claim 5, wherein the first sealed end (120) of a capsule (110) is sealed by a frangible film (122), and the second sealed end (121) is formed of a rigid material,
wherein said capsule compartment (106) includes an upward facing jagged surface (240); and
said hydraulic operated plunger (231) includes at least one downward facing puncturing element (232) for puncturing the second sealed end (121), hydraulically movable towards said upward facing jagged surface (240), thereby puncturing the second sealed end (121) and rupturing of the first sealed end (120);
wherein said selectably retractable holder (108) is configured, in its retracted position, to position the beverage capsule (110) such that its first sealed end (120) faces downwards towards said upward facing jagged surface (240), and its second sealed end (121) faces upwards towards said at least one downward facing puncturing element (232),
and wherein actuation of said pump (145) is further operative to move said at least one downward facing puncturing element (232) towards said upward facing jagged bottom surface (240), thereby to cause puncturing of the second sealed (121) end and rupture of the first sealed end (120), whereupon liquid pumped by said pump (145) to said liquid inlet (116) is forced through the openings formed in both ends of the capsule (110) so as to mix with the flavoring agent therein so as to form a beverage, thereafter flowing out of said beverage preparation head (100, 102) via said delivery spout (112).

7. A system (90) according to claim 6, further comprising a beverage solenoid valve (223) operative to facilitate drainage of residue liquid and materials from within said capsule compartment (106).

8. A system (90) according to any of the preceding claims, wherein said system (90) is adapted to receive water from an external source, and also includes a pressure valve for reducing the pressure of the water received from the external source.

9. A system (90) according to any of the preceding claims, wherein said mounting element (104, 400) comprises a mounting housing (805) comprising:
a bottom portion configured to connect to a base (115) of the faucet (105);
a top portion configured to connect to the faucet spout (113);
a first side opening (810) directing of at least one water supply line and a hydraulic hose (220) from said pump (145) to the housing (101);
a partition (820) to separate the faucet conduit and said at least one water supply line and said hydraulic hose (220).

10. A system (90) according to any of the preceding clams, wherein said mounting element (104, 400) comprises:
a first clamping element (405) connected to the housing (101);
a second clamping element (415);
one or more screws connecting said first and second clamping elements (405, 415) thereby clamping said first and second clamping elements (405, 415) onto a faucet spout (113).

11. A system (90) according to any of the preceding claims, wherein said hydraulic operating unit (150) includes a controller (260), said system (90) further comprising an activation button (270) configured to activate said controller (260).
